**Europäisches Patentamt**

**European Patent Office**

**Office européen des brevets**

(19)

(11) Veröffentlichungsnummer: **0 044 542**

**A2**

(12)

# EUROPÄISCHE PATENTANMELDUNG

(21) Anmeldenummer: **81105630.8**

(22) Anmeldetag: **17.07.81**

(51) Int. Cl.³: **G 01 D 11/24**
**G 12 B 9/02**

(30) Priorität: **18.07.80 DE 3027365**

(43) Veröffentlichungstag der Anmeldung:
**27.01.82 Patentblatt 82/4**

(84) Benannte Vertragsstaaten:
**AT BE CH FR GB IT LI LU NL**

(71) Anmelder: **Neuberger Messinstrumente KG**
**Steinerstrasse 16**
**D-8000 München 70(DE)**

(72) Erfinder: **Münsterer, Helmut**
**Grasmückenstrasse 4**
**D-8031 Olching(DE)**

(72) Erfinder: **Kanzler, Erwin**
**Pirkheimer Strasse 6**
**D-8000 München 70(DE)**

(74) Vertreter: **European Patent Attorneys Dipl.-Phys. Dr.**
**Gerhart Manitz Dipl.-Ing., Dipl.-Wirtsch.-Ing. Manfred**
**Finsterwald**
**Dipl.-Ing. Werner Grämkow Dipl.-Chem. Dr. Heliane**
**Heyn Dipl.-Phys. Hanns-Jörg Rotermund B. Sc. Phys.**
**D.M.S. James G. Morgan**
**Robert-Koch-Strasse 1 D-8000 München 22(DE)**

(54) **Messinstrumentengehäuse.**

(57) Es wird ein Meßinstrumentengehäuse beschrieben, das sowohl als Einbaugehäuse als auch als Aufbaugehäuse mit sicherem Halt an einer Schalttafel befestigt werden kann. Dazu liegt auf einer von einem dünnen Rand umgebenen, eine Ausnehmung zur Unterbringung der Skala und gegebenenfalls der Blende umgebenden, schmalen Auflagefläche der auf der Frontseite rings um einen Einbauflansch aufweisenden Frontplatte ein von der Frontseite her nach hinten abgestufter, schmaler Randbereich des Deckglases auf, der von der Auflageseite entgegensetzten Seite von einem an der Frontplatte befestigten Rahmen an der Auflagefläche festhaltbar ist. An der Rückseite der Frontplatte sind Mittel zum Befestigen der Frontplatte an der Schalttafel bei am Rand der Schalttafelöffnung aufliegendem Einbauflansch und bei durch eine Bohrung einer Schalttafel hindurchgestecktem Tubus und mit der Rückseite an der Frontseite der Schalttafel anliegender Frontplatte vorgesehen.

FIG.1

- 1 -

0044542

Die Erfindung betrifft ein Meßinstrumentengehäuse mit einer die Skala und das Deckglas tragenden, eine Durchtrittsöffnung für die Zeigerantriebsmittel aufweisenden Frontplatte, welche eine im wesentlichen ebene Rückfläche aufweist, und einem sich im Bereich der Durchtrittsöffnung von der Rückseite der Frontplatte weg erstreckenden, das Meßwerk aufnehmenden, zylindrischen Tubus.

Ein Meßinstrumentengehäuse mit einer im allgemeinen rechteckigen oder quadratischen Frontplatte und einem von deren Rückseite im wesentlichen senkrecht wegstehenden Tubus zur Aufnahme des Meßwerkes ist bereits vorgeschlagen worden (DE-OS 29 08 160). Der Durchmesser des Tubus ist dabei wesentlich geringer als die Länge der Seiten der rechteckigen Frontplatte. Im allgemeinen beträgt der Außendurchmesser des Tubus 26 mm. Andererseits ist die axiale Tiefe des Tubus relativ groß, um das Meßwerk, die Achsenlager und gegebenenfalls verschiedene Schaltungselemente aufnehmen zu können. Die axiale Tiefe der Frontplatte ist dagegen nur so groß, wie das für die Unterbringung der Skala, der Blende und des Deckglases erforderlich ist. Der wesentliche Vorteil dieses Meßinstrumentengehäuses besteht darin, daß mit nur einem oder ganz wenigen Grundmeßwerken Instrumente mit zahlreichen, unterschiedlichen Meßbereichen und Zeigerlängen verwirklicht werden können, wobei insbesondere eine Schiebeskala verwendet wird, wie sie beispielsweise aus den deutschen Auslegeschriften 22 36 481 und 22 31 657 bekannt ist.

Ein Meßinstrumentengehäuse mit einer quadratischen Frontplatte und davon senkrecht abzweigendem Tubus zur Aufnahme des Meßwerkes ist auch schon aus der US-PS 24 22 714 bekannt. Das bekannte Gehäuse läßt sich jedoch lediglich als Aufbaumeßinstrumentengehäuse verwenden, welches in einer einen Durchlaß für den Tubus bildenden Bohrung einer Schalttafelöffnung angeordnet werden kann.

Ein Deckgläser an der Frontseite eines Innenrahmens haltender Schnapprahmen ist bei einem Einbauinstrument bekannt (DE-OS 2325833).

Demgegenüber besteht die Aufgabe der vorliegenden Erfindung darin, ein Meßinstrumentengehäuse der eingangs genannten Gattung zu schaffen, welches sowohl als Einbaugehäuse etwa gemäß der DE-AS 22 06 979 als auch als Aufbaugehäuse etwa gemäß der US-PS 24 22 714 verwendet werden kann, ohne daß es irgendwelcher Umbauten am Gehäuse bedarf und ohne daß der sichere Halt des Meßinstrumentengehäuses an der Schalttafel beeinträchtigt wird.

Zur Lösung dieser Aufgabe sieht die Erfindung vor, daß auf einer von einem dünnen Rand umgebenen, eine Ausnehmung zur Unterbringung der Skala und gegebenenfalls der Blende umgebenden, schmalen Auflagefläche der auf der Frontseite rings um einen Einbauflansch aufweisenden Frontplatte ein von der Frontseite her nach hinten abgestufter, schmaler Randbereich des Deckglases aufliegt, der von der der Auflageseite entgegengesetzten Seite von einem an der Frontplatte befestigten Rahmen an der Auflagefläche festhaltbar ist, und daß an der Rückseite der Frontplatte Mittel zum Befestigen der Frontplatte an der Schalttafel bei am Rand der Schalttafelöffnung aufliegendem Einbauflansch und bei durch eine Bohrung einer Schalttafel hindurchgestecktem Tubus und /mit der Rückseite an der Frontseite der Schalttafel anliegender Frontplatte vorgesehen sind. Auf diese Weise kann das Meßinstrumentengehäuse als Einbauinstrument in eine Schalttafelöffnung eingebaut werden, deren Abmessungen denen der Frontplatte hinter dem Flansch entsprechen. Wird der Tubus in eine entsprechende Bohrung einer Schalttafelöffnung eingesetzt, so liegt die Frontplatte mit ihrer Rückseite flach auf der Frontseite der Schalttafel auf und wird in diesem Zustand befestigt. Die Frontplatte steht jetzt zwar um das hinter dem Flansch befindliche Stück weiter von der Oberfläche der Schalttafel vor als im erstgenannten Fall, doch kann das Stück hinter dem Flansch in seiner Tiefe relativ knapp gehalten werden, weil die Frontplatte nur für die Aufnahme der Skala, gegebenenfalls der Blende und des Deckglases dimensioniert sein muß. Vorzugsweise ist die Tiefe der Frontplatte hinter dem Flansch etwa gleich der Tiefe des
Flansches bis etwa zum Doppelten der Flanschtiefe. Die Gesamttiefe der Frontplatte einschließlich des Flansches liegt in
der Größenordnung von 1 cm.

Um dem etwas unterschiedlichen Abstand der Frontseite der
Frontplatte von der Schalttafeloberfläche bei den beiden
unterschiedlichen Einbaumöglichkeiten Rechnung zu tragen,
ist nach einer besonders bevorzugten Ausführungsform der
Erfindung vorgesehen, daß für die Frontplatte zwei im wesentlichen gleich
ausgebildete aufschnappbare Rahmen vorgesehen sind, deren Tiefe jedoch der Tiefe
des Flansches bzw. der gesamten Frontplatte entspricht.
Je nach der Einbauart kann also entweder der eine oder
andere Rahmen verwendet werden und dadurch erreicht werden,
daß der rund um die Frontplatte bzw. den Flansch verlaufende
Rand des Rahmens sich in jedem Fall bis zur Oberfläche der
Schalttafel erstreckt. Das Vorrätighalten zweier unterschiedlicher Rahmenarten, welche sehr billig als Kunststoffspritzteile herstellbar sind, ist im Vergleich zur Lagerhaltung
zweier unterschiedlicher Gehäusetypen wesentlich wirtschaftlicher. Fertige Instrumente können durch nachträgliches Wechseln der schnappbaren Rahmen von einem Typ in den anderen verwandelt werden.
Ein weiteres Ziel der Erfindung besteht darin, das gleiche
Meßinstrumentengehäuse noch einer weiteren Einbaumöglichkeit
zugänglich zu machen; und zwar soll das Gehäuse auch mittels
eines Einbaurahmens in einer Schalttafelöffnung befestigt
werden können, wie er beispielsweise aus der Gebrauchsmusterschrift 72 29 433 bekannt ist. Um auch eine derartige zusätzliche Einbaumöglichkeit zu schaffen, sieht die Erfindung vor,
daß an der Rückseite der Frontplatte auch Mittel zum Befestigen der Frontplatte an einem den Randbereich des Deckglases
gegen die Auflagefläche haltenden, in einer Schalttafelöffnung zu befestigenden Einbaurahmen vorgesehen sind. Die Befestigungsmittel können im einfachsten Fall aus zwei Seitenbereichen der Rückenfläche der Frontplatte bestehen, mit denen die Schnappnasen des Einbaurahmens in Eingriff treten. Den
Schnappnasen muß eine so große Länge gegeben werden, daß sie
über die Breite des Flansches hinaus die betreffenden Seitenbereiche der Rückenfläche der Frontplatte erreichen können.
In dieser Ausführung werden die Befestigungsschrauben aus den ersten beiden
Varianten fortgelassen.
Die Fronträder aller beim erfindungsgemäßen Meßinstrumentengehäuse verwendeten Rahmen erstrecken sich nach innen über
den schmalen Randbereich des Deckglases, um diesen an der
Auflagefläche zu halten. Nach innen erstrecken sich die
Ränder bis zu dem stufenförmig vorstehenden Zentralbereich
des Deckglases, welcher - wie die Frontplatte selbst-quadratisch oder rechteckförmig ist. Die Tiefe der Fronträder
der Rahmen ist vorzugsweise so gewählt, daß sie der Tiefe
entspricht, um die der Zentralbereich des Deckglases von den
schmalen Rändern nach vorn vorspringt, so daß die Frontseite
der Ränder und des Deckglases im wesentlichen bündig miteinander sind.

Schließlich will die Erfindung noch eine weitere Einbaumöglichkeit für das erfindungsgemäße Meßinstrumentengehäuse eröffnen,
und zwar in solchen Fällen, wo lediglich das Deckglas aus einer
entsprechend dimensionierten Öffnung in einer Schalttafel herausschauen soll. Um auch dies noch zu ermöglichen, ist eine
weitere vorteilhafte Ausführungsform der Erfindung so ausgebildet, daß an der Rückseite der Frontplatte auch Mittel zum
Befestigen der ein der Stärke der Schalttafel und mit dem Umriß ihres dicken Zentralteiles dem Umriß der Schalttafelöffnung entsprechendes Stufendeckglas tragenden Frontplatte von
hinten in der Schalttafelöffnung, wobei die von der Auflageseite entgegengesetzte Seite des Randbereiches des Stufendeckglases von dem Rand der Schalttafelöffnung an der Auflagefläche
festgehalten ist.

Um auch diese Einbaumöglichkeit zu eröffnen, braucht also statt
eines normalen Gehäusedeckglases nur ein weiteres Stufendeckglas vorrätig gehalten zu werden, was wesentlich wirtschaftlicher als die Lagerhaltung eines für diese Zwecke geeigneten besonderen Gehäuses ist. Die Befestigungsmittel können ähnlich wie bei der vorangehend beschriebenen Ausführungsform durch seitliche Bereiche der Rückenfläche oder des Flansches der Frontplatte gebildet sein, hinter die an der Rückseite der Schalttafel angebrachte Befestigungszungen oder dergleichen greifen.

Eine bevorzugte praktische Verwirklichung der Befestigungsmittel für den Einbau und Aufbau des Meßinstrumentengehäuses kennzeichnet sich dadurch, daß sich senkrecht von der Rückseite der Frontplatte außerhalb des Bereiches des Tubus wenigstens ein und vorzugsweise in deutlichem Abstand zwei Gewindestifte erstrecken. Vorzugsweise sind dabei zwei Gewindestifte im wesentlichen in zwei auf einer Diagonalen liegenden Ecken der Frontplatte angeordnet. Der Tubus soll dabei in einer der beiden verbleibenden Ecken angeordnet sein.

Beim Aufbau des Meßinstrumentengehäuses auf eine Schalttafel werden den Gewindestiften entsprechende Löcher in die Schalttafel gebohrt. Beim Einbau in eine den Abmessungen der Frontplatte hinter dem Flansch entsprechende Schalttafelöffnung kann die Befestigung durch Anbringung geeigneter Haltemittel an den Gewindestiften erfolgen. Insbesondere erstreckt sich hierzu nach einer weiteren vorteilhaften Ausführungsform ein Haltebügel mit Bohrungen zur Aufnahme der Gewindestifte zumindest teilweise bis über den Flansch. Der Haltebügel ist zweckmäßig ein im wesentlichen ebenes Kunststoffbauteil, welches sich zwischen den und um die Gewindestifte herum erstreckt.

Besonders vorteilhaft ist es, wenn der Haltebügel im Bereich der Gewindestifte entsprechend der Frontplatte rechtwinklige Eckbereiche aufweist und die rechtwinklig zueinander verlaufenden Ränder der Eckbereiche mit dem Flansch der Frontplatte im wesentlichen fluchten. Damit der Haltebügel als ein einheitliches Bauteil vorliegt, hängen vorteilhafterweise die beiden Eckbereiche durch ein am Tubus vorbeilaufendes Verbindungsstück zusammen. Dieses Verbindungsstück trägt auch zur sicheren Halterung des Gehäuses bei.

Von besonderem Vorteil ist es, wenn der Haltebügel an den Eckbereichen axial gegenüber dem Flansch an dem ebenen Bauteil nach einer Seite vorstehende gerade Ränder aufweist. Diese Ränder sind vorzugsweise so dünn ausgebildet, daß sie beim Aufsetzen des Haltebügels von hinten auf die Gewindestifte nur an der Rückfläche der Ränder der Schalttafelöffnung, nicht aber an der Rückfläche der Frontplatte aufliegen. Beim Einbau des Meßinstrumentengehäuses kann so die Frontplatte ohne weiteres nach innen über die Rückfläche der Schalttafel vorstehen. Außerdem können bei dieser Ausführungsform die Gehäuse dicht aneinandergelegt werden, was für Schalttafeln in Mosaik-Bauweise von Bedeutung ist. Beim Aufbau wird der erfindungsgemäße Haltebügel vorzugsweise mit den Rändern nach hinten auf die Gewindestifte aufgeschoben und dann wie im ersten Fall mit Muttern befestigt. Hierdurch kann ein besonders fester Halt des Gehäuses an der Schalttafel erzielt werden.

Um ein seitliches Verbiegen der Rahmenseiten wirksam zu vermeiden, kann bei einer weiteren Ausführungsform der Erfindung vorgesehen sein, daß der Randbereich des Deckglases mit seitlichem Abstand von dem dickeren Zentralteil sich von der Frontseite wegerstreckende Rippen aufweist, zwischen welche und den Zentralteil Vorsprünge des Rahmens greifen. Die Rahmenseiten werden so durch die Rippen gegen ein Verbiegen nach außen sicher festgehalten.

Die Erfindung läßt sich mit besonderem Vorteil auch bei Meßinstrumentengehäusen mit einer zwischen Deckglas und Frontplatte angeordneten Blende anwenden. In diesem Fall sieht die Erfindung vor, daß die Blende vom Deckglas am Boden der Ausnehmung gehalten ist. Somit halten die Rahmen bzw. die Rückfläche einer Schalttafelöffnung nicht nur das Deckglas, sondern auch die Blende in der Frontplatte fest.

Mit besonderem Vorteil wird auch bei der vorliegenden Erfindung von einer Schiebeskala Gebrauch gemacht, wie sie beispielsweise aus der DE-AS 23 25 o8o bekannt ist. Gemäß vorliegender Erfindung ist jedoch zur Schaffung eines kompakten Aufbaus, einer einfachen Herstellbarkeit und einer einwandfreien Führung der Schiebeskala vorgesehen, daß axial hinter dem Flansch in einer Schmalseite ein Schlitz vorliegt, welcher innen in der Ausnehmung mündet. Vorzugsweise ist der hintere Rand des Schlitzes bündig mit dem ebenen Boden der Ausnehmung. Die Schiebeskala liegt so flach auf der ebenen Bodenfläche der Ausnehmung auf, was insbesondere eine gute Sicherheit gegen Durchbiegen nach hinten bedeutet. Um für das Einführen der Schiebe- oder Wechselskala Platz zu schaffen, hat die Blende an der Schlitzseite einen der Schlitzbreite entsprechenden Abstand von dem Boden der Ausnehmung. Erfindungsgemäß weist nun die Blende an den übrigen Seiten mit dem Schlitz ausgerichtete Führungen auf, welche sich in Vertiefungen am Boden der Frontplatte erstrecken.

Der Schlitz ist zweckmäßigerweise durch ein aufschnappbares Winkelteil abdeckbar, welches im aufgeschnappten Zustand in eine Nut an der Rückseite des Flansches eingreift und mit den übrigen Seiten der Frontplatte fluchtet. Das Winkelteil ergänzt also im aufgeschnappten Zustand den hinter dem Flansch befindlichen Teil der Frontplatte zu einem flachen quaderförmigen Gebilde. Aufgrund dieser speziellen Ausbildung des den Schlitz abdeckenden Winkelteils werden die verschiedenen Einbaumöglichkeiten des erfindungsgemäßen Meßinstrumentengehäuses nicht beeinträchtigt.

Die Erfindung wird im folgenden beispielsweise anhand der Zeichnung beschrieben; in dieser zeigt:

Fig. 1 eine Draufsicht einer bevorzugten Ausführungsform des erfindungsgemäßen Meßinstrumentengehäuses, wobei der Rahmen, das Deckglas, die Blende und die Skala herausgenommen sind, jedoch das in den Tubus eingebaute Meßwerk mit dem Zeiger schematisch angedeutet ist,

Fig. 2    einen Schnitt nach den Linien II-II in Fig. 1,
          wobei jedoch der Rahmen, das Deckglas, die Blende
          und die Skala dargestellt sind,

Fig. 3    einen Schnitt nach Linie III-III in Fig. 1, wobei
          zusätzlich die Skala dargestellt ist,

Fig. 4    einen Schnitt nach Linie IV-IV in Fig. 1, wobei
          zusätzlich der Rahmen, das Deckglas, die Blende
          und die Skala dargestellt sind,

Fig. 5    eine teilweise geschnittene Seitenansicht der
          verschiedenen miteinander kombinierbaren Kompo-
          nenten des erfindungsgemäßen Meßinstrumentenge-
          häuses in auseinandergezogener Darstellung,

Fig. 6    eine Draufsicht des für das erfindungsgemäße Meß-
          instrumentengehäuse bestimmten Haltebügels,

Fig. 7    eine teilweise geschnittene Seitenansicht des
          Gegenstandes der Fig. 6,

Fig. 8    eine teilweise geschnittene Seitenansicht des er-
          findungsgemäßen Meßinstrumentengehäuses beim Ein-
          bau in eine Schalttafelöffnung,

Fig. 9    eine teilweise geschnittene Seitenansicht des er-
          findungsgemäßen Meßinstrumentengehäuses beim Auf-
          bau auf eine Schalttafel,

Fig. 10   in der linken Hälfte eine teilweise geschnittene
          Seitenansicht analog Fig. 8 eines in eine dicke
          Schalttafel eingebauten Meßinstrumentengehäuses
          gemäß der Erfindung und in der linken Hälfte eine
          analoge Ansicht des in die Öffnung einer besonders
          dünnen Schalttafel eingebauten Meßinstrumentengehäuses gemäß der Erfindung,

Fig. 11   eine teilweise geschnittene Seitenansicht eines mittels
          eines Einbaurahmens in eine Schalttafelöffnung eingebauten Meßinstrumentengehäuses gemäß der Erfindung und

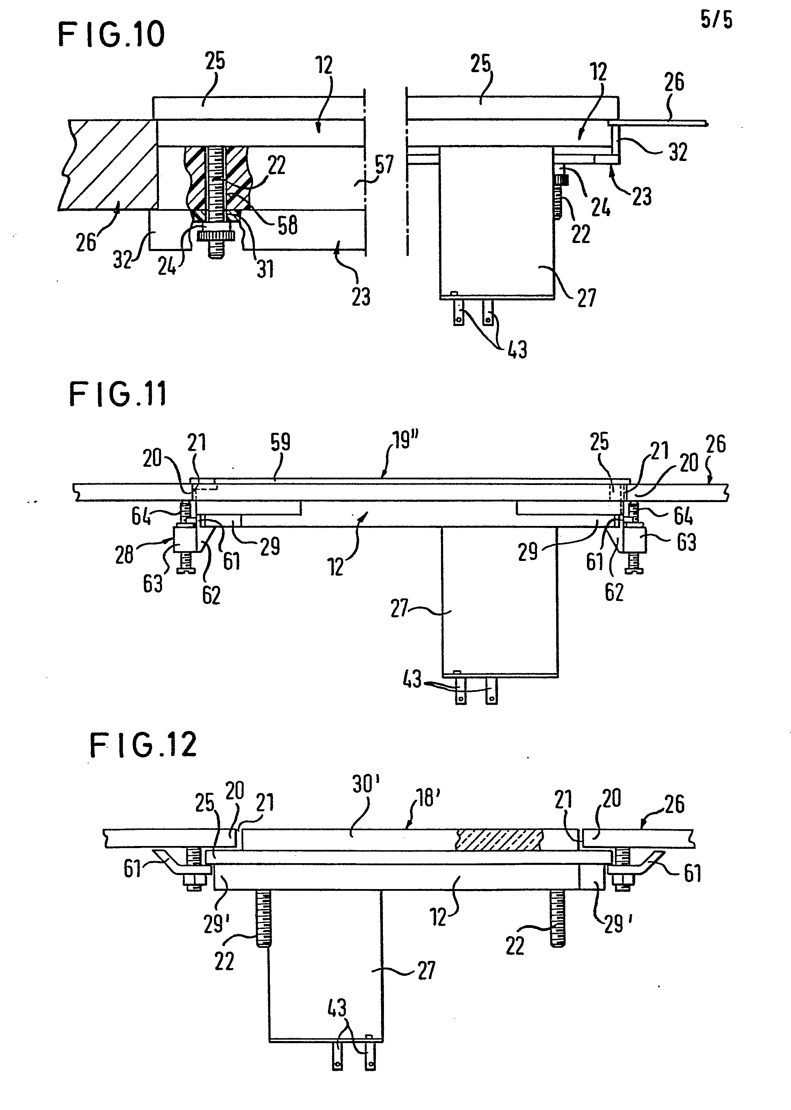

Fig. 12   eine teilweise geschnittene Seitenansicht eines mit einem dicken Stufenglas versehenen Meßinstrumentengehäuses
          gemäß der Erfindung, welches von hinten in eine den Abmessungen des dicken Zentralbereiches des Stufenglases
          entsprechende Schalttafelöffnung eingebaut ist.

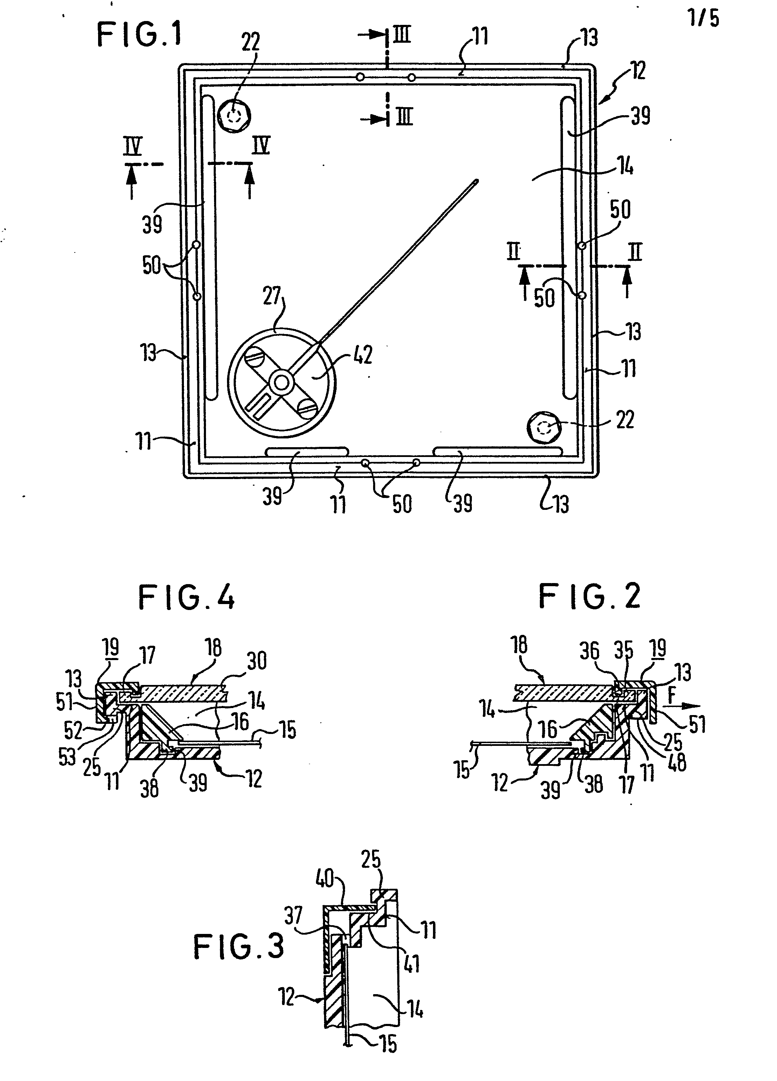

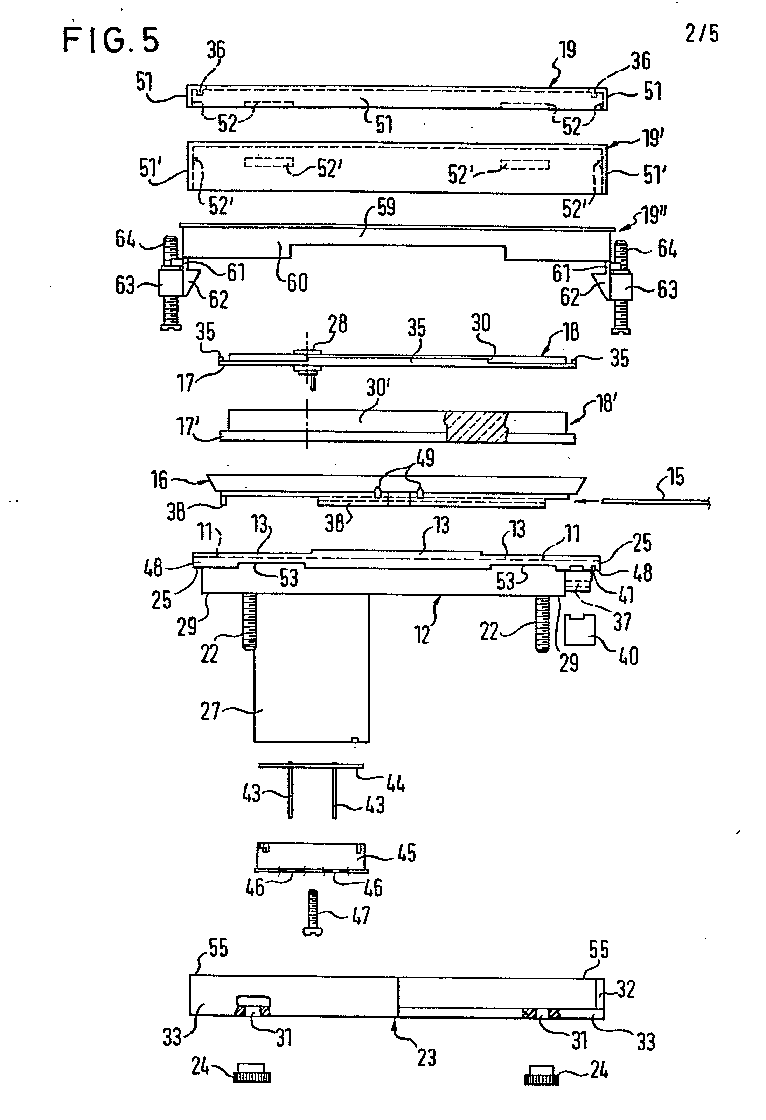

Nach den Fig. 1 bis 5 weist das erfindungsgemäße Meßinstrumentengehäuse eine in der Draufsicht nach Fig. 1 quadratische Frontplatte 12 auf, von der sich in einem Eckbereich nach hinten (Fig.5)
ein zylindrischer Tubus 27 erstreckt, in dessen von vorn nach hinten durchgehenden, jedoch mit nicht dargestellten, radial nach
innen vorspringende Befestigungsteile aufweisenden zylindrischen Aufnahmeraum das Meßwerk 42 untergebracht und befestigt
ist. Nach Fig. 5 wird von der von der Frontplatte 12 abgewandten
Seite her eine die Anschlußstifte 43 tragende Platine 44 in den
zylindrischen Aufnahmeraum des Tubus 27 eingesetzt, und zwar derart, daß die Anschlußstifte 43 noch nach hinten über den Tubus 27
vorstehen. Ein Deckel 45 wird schließlich zum Verschließen auf
den Tubus 27 aufgesetzt. Die Anschlußstifte 43 erstrecken sich
dabei durch entsprechende Öffnungen 46 im Boden des Deckels 45.
Mittels einer Schraube 47 wird der Deckel auch zur Festlegung
der Platine 44 an einem im Innern des Tubus 27 vorgesehenen
Kragen befestigt.

Nach Fig. 5 ist im vorderen Bereich der Frontplatte 12 rundum
ein Flansch 25 vorgesehen, welcher zur Bildung einer Anschlagfläche 48 allseits über den Grundkörper der Frontplatte 12
vorsteht.

Von der Frontseite des Flansches 25 steht ganz außen ein schmaler Rand 13 nach vorne vor, welcher nach Fig. 1 die äußere Begrenzung der Frontplatte 12 bildet und nach Fig. 5 in der Mitte der vier Seiten etwas weiter nach vorn vorspringt als in den Eckbereichen.

An den schmalen Rand 13 schließt sich nach innen eine parallel zur Ebene der Frontplatte 12 verlaufende Auflagefläche 11 an, welche in der siebten Darstellung der Fig. 5 von oben gestrichelt angedeutet ist und deren Anordnung und Aufbau besonders deutlich aus den Fig. 1 bis 4 hervorgehen.

Während der Rand 13 etwa 1 mm breit ist, liegt die Breite der Auflagefläche 11 etwa beim Doppelten der Breite des Randes 13, d.h. bei etwa 2 mm.

Nach innen von der Auflagefläche 11 schließt sich eine im wesentlichen quaderförmige Ausnehmung 14 an, welche einen allgemein ebenen Boden besitzt, in dem nach Fig. 1 der Tubus 27 mündet und eine kreisförmige Öffnung für das Meßwerk 42 bildet.

Nach Fig. 3 weist die in Fig. 1 obere Schmalseite der Frontplatte 12 hinter dem Flansch 25 einen sich über die gesamte Länge der Seite erstreckenden Schlitz 37 auf, dessen Breite der Stärke der Einschubskala 15 entspricht. Parallel zu den übrigen drei Seiten befinden sich im Boden der Ausnehmung 14 längliche Vertiefungen 39, welche zur Aufnahme von Führungen 38 bestimmt sind, die an der hinteren Seite einer in die Ausnehmung 14 einsetzbaren quadratischen Blende 16 bestimmt sind. Nach den Fig. 2 und 4 ist der untere Rand der Führungsnuten 38 in etwa bündig mit dem Boden der Ausnehmung 14, so daß eine eingeschobene Einschiebeskala 15, welche die Form einer dünnen Platte hat, nicht nur in den Führungen 38 geführt, sondern gleichzeitig vom Boden der Ausnehmung 14 abgestützt wird.

In seitlicher Richtung erstreckt sich die Vorderkante der Blende 16 bis etwa zur Höhe der Auflagefläche 11, so daß ein auf die Auflagefläche 11 aufgesetztes Deckglas 18 bzw. 18' die Blende gegen den Boden der Ausnehmung 14 bzw. der Vertiefungen 39 drückt.

Nach Fig. 5 können an der Blende auch noch nach hinten vorstehende dünne Zapfen 49 mit angespritzt sein, welche beim Einsetzen der Blende in die Ausnehmung 14 der Frontplatte 12 in dazu passende Löcher 50 eingreifen, wodurch die Blende auch gegen ein Durchbiegen ihrer Seiten gesichert ist.

Nach den Fig. 1 bis 4 ist auf die Auflagefläche 11 der Frontplatte 12 ein spezielles Deckglas 18 aufgelegt, welches in der vierten Darstellung der Fig. 5 in Seitenansicht gezeigt ist. Das Deckglas weist einen quadratischen Zentralbereich 30 auf, der etwa mit den Abmessungen der quadratischen Ausnehmung 40 zusammenfällt. Im hinteren Bereich weist das Deckglas 18 einen allseitig über den Zentralbereich 30 vorstehenden Randbereich 17 auf, der sich bei auf die Vorderseite der Frontplatte 12 aufgesetztem Deckglas 18 bis zum schmalen Rand 13 erstreckt und auf der Auflagefläche 11 aufliegt. Nach den Fig. 3 und 4 ist der Randbereich 17 im eingesetzten Zustand des Deckglases 18 zumindest mit dem Rand 13 der Frontplatte 12 bündig. Vorzugsweise steht er nach vorn geringfügig vor.

Vom Randbereich 17 ausgehend springt also der Zentralbereich 30 des Deckglases 18 nach vorn stufenartig vor.

Nach den Fig. 2, 3 ist auf den Randbereich 17 des in die Frontplatte 12 eingesetzten Deckglases 18 ein in der ersten Darstellung der Fig. 5 in Seitenansicht gezeigter Rahmen 19 aufgeschnappt. Hierzu weisen die Seitenränder 51 des Rahmens 19 nach innen vorstehende Schnappnasen 52 auf, welche hinter an der Rückseite des Flansches 25 vorgesehene Rastausnehmungen 53 (Fig. 5) einschnappen können, indem beim Aufsetzen die Seitenränder 51 federnd seitlich nachgeben. Hierzu sind die Schnappnasen 52 an ihrer Hinterseite entsprechend abgeschrägt.

Nach Fig. 2, 3 erstreckt sich der Seitenrand 51 der Rahmen 19 nach hinten bis im wesentlichen zur hinteren Fläche des Flansches 25.

Nach den Fig. 2 und 5 besitzen die Vorderränder des Rahmens 19 innen in einem Abstand von den Seitenrändern 51 nach hinten vorspringende Vorsprünge 36, welche bei aufgeschnapptem Rahmen 19 hinter Rippen 35 des Randbereiches 17 greifen, die in einem Abstand vom Zentralbereich 30 des Deckglases 18 angeordnet sind. Hierdurch wird ein Ausbiegen der Rahmenseite in Richtung des Pfeiles F in Fig. 2 wirksam vermieden. Nach Fig. 2 stehen lediglich die Rippen 35 etwas über den Rand 13 nach vorne vor.
Nach der siebten Darstellung in Fig. 5 erstrecken sich von der Rückseite der Frontplatte 12 Gewindestifte 22, welche nach Fig.1, wo sie gestrichelt angedeutet sind, etwa auf einer Diagonalen der Frontplatte 12 liegen. Die Gewindestifte 22 befinden sich also in zwei Eckbereichen der Frontplatte 12. In einem der beiden anderen Eckbereiche befindet sich der Tubus 27.

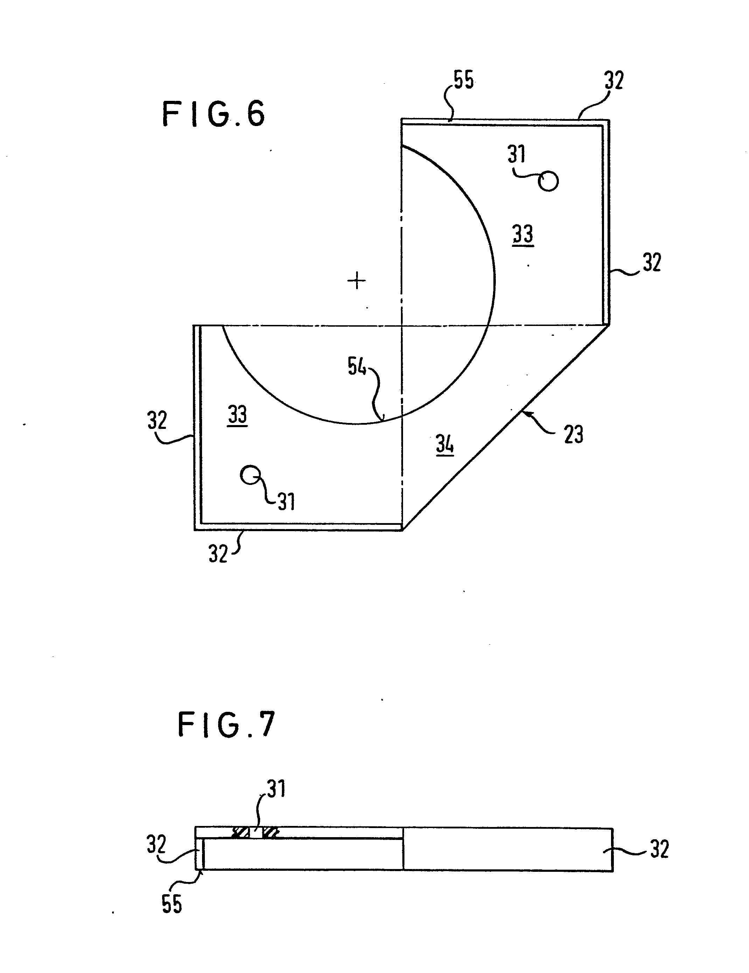

Nach den Fig. 5 und 6 kann von hinten auf die Gewindestifte 22 ein Haltebügel 23 aufgesetzt werden, welcher zwei der Form der Frontplatte 12 angepaßte Eckbereiche 33 aufweist, die durch ein Verbindungsstück 34 miteinander verbunden sind. Der Haltebügel 23 ist ein im wesentlichen ebenes Kunststoffbauteil, welches zwecks Herumgreifens um den Tubus 27 einen teilkreisförmigen Ausschnitt 54 (Fig. 6) aufweist. Der halbkreisförmige Ausschnitt 54 ist größer als der Tubusdurchmesser, um ggf. später auch bei größeren Tuben mit größeren Meßwerken verwendet werden zu können.
In den Eckbereichen 33 sind Bohrungen 31 vorgesehen, deren Abstand dem der Gewindestifte 22 entspricht. Die rechtwinkligen Außenkanten der Eckbereiche 33 sind mit axial vorstehenden schmalen Rändern 32 versehen, welche unter einem rechten Winkel zueinander stehende schmale Anlageflächen 55 bilden.

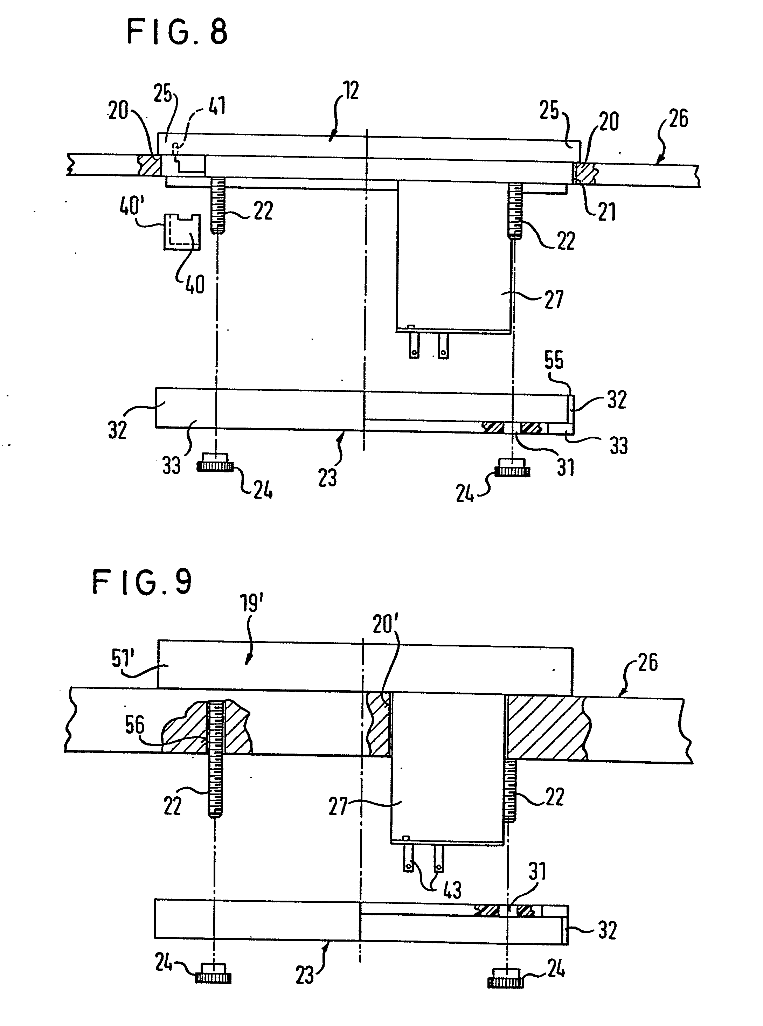

Nach Fig. 8 sind die axial vorstehenden Ränder 32 bei auf die Gewindestifte 22 aufgesetztem Haltebügel 23 mit dem Flansch 25 axial ausgerichtet, derart, daß die Ränder 32 außerhalb des hinter dem Flansch 25 liegenden Bereiches der Frontplatte 12 zu liegen kommen.

Im wesentlichen fluchten die vorstehenden Ränder 32 mit den Eckbereichen des Flansches 25.

Nach den Fig. 5 und 8 können Muttern 24 zur Befestigung des Haltebügels 23 auf die Gewindestifte 22 aufgeschraubt werden.

Fig. 8 zeigt den Einbau des beschriebenen Meßinstrumentengehäuses in eine quadratische Schalttafelöffnung 21 in einer Schalttafel 26. Die Abmessungen der Schalttafelöffnung 21 entsprechen denen der Frontplatte 12 hinter dem Flansch 25. Wird das Gehäuse von vorn in die Schalttafel 26 eingesetzt, so kommt der Flansch 25 mit der Fläche 48 auf den Rändern 20 der Schalttafelöffnung 21 zu liegen.

Nunmehr wird von hinten in der aus Fig. 8 dargestellten Weise der Haltebügel 23 auf die Gewindestifte 22 aufgesetzt. Hierbei kommen die axial vorstehenden Ränder 32 mit ihren Auflageflächen 55 zur Anlage an der Rückseite der Ränder 20. Durch Festziehen der Muttern 24 kann so das eingebaute Gehäuse in der Schalttafel 26 befestigt werden.

In den Fig. 3, 5 und 8 ist auch noch ein Winkelteil 40 dargestellt, dessen einer Schenkel 40' in eine Nut 41 an der Rückseite des Flansches 25 eingreifen kann. Das Winkelteil 40 deckt den Bereich um den Schlitz 37 herum ab. Es ist auf die Frontplatte 12 von hinten her aufschnappbar und vervollständigt das Gehäuse im aufgeschnappten Zustand im Bereich um den Schlitz 37 herum.

Vor dem Aufschieben des Haltebügels 23 nach Fig. 8 ist zunächst das Winkelteil 40 über dem Schlitz 37 durch Einschnappen anzuordnen.

In Fig. 9 ist gezeigt, wie das erfindungsgemäße Meßinstrumentengehäuse im Aufbau an einer Schalttafel 26 befestigt wird. Zunächst wird eine dem Durchmesser des Tubus 27 entsprechende
Bohrung 20' in der Schalttafel 26 angebracht, was wesentlich
leichter als die Anbringung einer quadratischen Öffnung ist.
Alsdann werden weitere Bohrungen 56 für den Durchgang der Gewindestifte 22 in der Schalttafel 26 vorgesehen. Nunmehr kann
das Meßinstrumentengehäuse von vorn her auf die Schalttafel 26
aufgebracht werden, indem der Tubus 27 durch die Bohrung 2o'
und die Gewindestifte 22 durch die Bohrungen 56 hindurchgesteckt werden. Sobald dies geschehen ist, wird der Haltebügel
23 umgekehrt wie beim Ausführungsbeispiel nach Fig. 8 auf die
Gewindestifte 22 aufgesetzt. Die Ränder 32 stehen jetzt also
nach hinten vor, und der ebene Teil des Haltebügels 23 kommt
zur Anlage an der Rückfläche der Schalttafel 26. Durch Aufschrauben der Muttern 24 kann das Meßinstrumentengehäuse so
im Aufbau an der Schalttafel 26 befestigt werden.

Da jetzt der Abstand des vorderen Randes der Frontplatte 12
von der Frontseite der Schalttafel 26 etwas größer ist, wird
erfindungsgemäß auf die Vorderseite der Frontplatte 12 ein
Frontrahmen 19' aufgeschnappt, welcher in der zweiten Darstellung von Fig. 5 wiedergegeben ist. Er weist ebenso wie
der Rahmen 19 an der gleichen Stelle Schnappnasen 52' auf,
hat jedoch eine größere Tiefe aufweisende Seitenränder 51',
so daß die Seitenränder 51' trotz des weiteren Vorstehens der
Frontplatte 12 vor die Schalttafel 26 bis zur Oberfläche der
Schalttafel 26 reichen, wie das in Fig. 9 dargestellt ist.

In der rechten Hälfte der Fig. 10 ist ein Einbau des Meßinstrumentengehäuses analog Fig. 8, jedoch bei einer wesentlich dünneren Schalttafel 26 gezeigt. Der Haltebügel 23 ist
hier im fest aufgeschraubten Zustand wiedergegeben. Aufgrund
der erfindungsgemäßen Ausbildung  erfolgt also automatisch
eine Anpassung an unterschiedliche Schalttafeldicken.

In der linken Hälfte der Fig. 10 ist der Einbau des erfindungsgemäßen Meßinstrumentengehäuses bei einer besonders dicken
Schalttafel gezeigt, wobei erfindungsgemäß zwischen der Rückseite der Frontplatte 12 und der Rückenfläche der Schalttafel
26 noch ein blockartiges Zwischenstück 57 angeordnet ist, welches Bohrungen 58 für die Gewindestifte 22 und eine nicht dargestellte Bohrung für den Tubus 27 aufweist. Aufgrund der Anordnung des Zwischenstückes 32, dessen Rückenfläche mit der der
Schalttafel 26 bündig ist, wird der Haltebügel 23 gerade umgekehrt als bei dem Ausführungsbeispiel nach Fig. 8 auf die Gewindestifte 22 aufgesetzt, so daß er flach an der Rückenfläche
der Schalttafel 26 und des Zwischenstückes 57 anliegt.

Fig. 11 veranschaulicht den Einbau des erfindungsgemäßen Meßinstrumentengehäuses in einen Einbaurahmen 19", wie er in Fig.5
in der dritten Darstellung von oben wiedergegeben ist. Ein derartiger Einbaurahmen ist z.B. aus der Gebrauchsmusterschrift
72 29 433 bekannt. Er weist einen sowohl nach außen als auch
nach innen vorspringenden vorderen Rand 59 auf, welcher über
den Rand der Schalttafelöffnung 21 nach außen und über den
Randbereich 17 des Deckglases 18 nach innen bis zum Zentralbereich 30 vorspringt. Die Rippen 35 am Randbereich 17 und die
Vorsprünge 36 am Rahmen brauchen bei Verwendung eines derartigen
Einbaurahmens 19" nicht vorgesehen zu sein, weil dessen Rahmenseiten sich an den Rändern 20 der Schalttafelöffnung 21 abstützen
können.

Die nach hinten vorstehenden Seitenränder 60 des Einbaurahmens
19" liegen den Rändern 20 der Schalttafelöffnung 21 gegenüber
und erstrecken sich durch die Schalttafelöffnung 21 hindurch.
Innen liegen die Seitenränder 60 an dem Flansch 25 der Frontplatte 12 an.

Von zwei gegenüberliegenden Seitenrändern 60 erstrecken sich
axial federnde Arme 61 nach hinten, an denen Schnappnasen 62
vorgesehen sind. Außen an den Schnappnasen sind Gewindevorsprünge 63 vorgesehen, in welche Schrauben 64 axial eingedreht sind. Die Schrauben 64 liegen so weit außerhalb der Seitenränder 60, daß sie in der aus Fig. 11 ersichtlichen Weise bei in die Schalttafelöffnung 21 eingesetztem Einbaurahmen 19'' von hinten gegen den Rand 20 der Schalttafel 26 geschraubt werden können.

Der Einbau bei dem Ausführungsbeispiel nach Fig. 11 geht wie folgt vor sich:

Zunächst wird der Einbaurahmen 19" bei nach innen gedrückten federnden Zungen 61 von vorn in die Schalttafelöffnung 21 eingesetzt. Die Schrauben 64 müssen hierbei weit zurückgedreht sein.

Nunmehr kann von hinten her das erfindungsgemäße Meßinstrumentengehäuse in den Einbaurahmen 19" eingesetzt werden, wobei die Schnappnasen 62 über ihre entsprechend ausgebildeten Schrägflächen nach außen federnd weggedrückt werden, bis sie hinter die Frontplatte 12 in der aus Fig. 11 ersichtlichen Weise einschnappen. Werden nun die Schrauben 64 eingedreht, bis sie die Ränder 20 von hinten erfassen, so werden die Schnappnasen 62 fest auf Abstützflächen 29 an der Rückseite der Frontplatte 12 gedrückt. Da gleichzeitig der Rahmen 19" nach hinten gezogen wird, erfolgt somit eine einwandfreie Fixierung des Meßinstrumentengehäuses in der Schalttafel 26. Wesentlich ist, daß die Schnappnasen 62 ausreichend lang sind und daß ihnen gegenüber die Abstützflächen 29 an der Frontplatte 12 vorgesehen sind.

Eine weitere Einbaumöglichkeit für das erfindungsgemäße Meßinstrumentengehäuse ergibt sich aus Fig. 12. In diesem Fall wird statt des eine Nullpunkteinstellungsschraube 28 enthaltenden normalen Gehäuseglases gemäß der vierten Darstellung in Fig. 5 ein einen wesentlich dickeren Zentralbereich 30' aufweisendes Stufenglas 18' mit einem Randbereich 17' verwendet. Wie aus Fig. 12 hervorgeht, entspricht die Stärke des von dem Randbereich 17'nach vorn vorstehenden Zentralbereiches 30' im wesentlichen der Stärke der Schalttafel 26.
Die Außenumrisse des Zentralbereichs 13' stimmen im wesentlichen mit dem Umriß der Schalttafelöffnung 21 überein. Die
Stärke des Randbereiches 17' entspricht der Dicke des Randbereiches 17 des
Deckglases 18 einschließlich der Rippen 35.
Wird nun unter Einsetzen des Stufendeckglases 18' in die
Frontplatte 12 das Meßinstrumentengehäuse in der aus Fig.12
ersichtlichen Weise von hinten in die Schalttafelöffnung 21
eingesetzt, so kommen die Rückenflächen des Randes 20 der
Öffnung 21 zur Auflage auf dem Randbereich 17' des Stufendeckglases 18'. Werden nun an der Rückseite der Frontplatte
12 Auflageflächen 29' für an der Rückseite der Schalttafel
26 befestigte Federzungen 61 oder dergleichen vorgesehen,
so kann das erfindungsgemäße Meßinstrumentengehäuse auch
so in der Schalttafelöffnung 21 angeordnet werden, daß von
vorn her nur der Zentralbereich 30' des Deckglases sichtbar
ist.

Aufgrund der erfindungsgemäßen Ausbildung kann das Meßinstrumentengehäuse also auf vier verschiedene Weisen
nach den Fig. 8, 9, 11 und 12 an einer Schalttafel angebracht werden.

Das erfindungsgemäße Meßinstrumentengehäuse eignet sich
besonders für die Massenfertigung. Die Montage und der
Einbau beim Benutzer derartiger Meßinstrumentengehäuse
sind weitgehend ohne Werkzeuge möglich. Außer den Befestigungsschrauben bestehen sämtliche Teile aus Kunststoff.

Die Teile des erfindungsgemäßen Meßinstrumentengehäuses
können in den gleichen Montagevorrichtungen vormontiert
werden, so daß man je nach Erfordernis nur den Gehäuseflansch der jeweiligen Einbauart zuordnet.

Besonders wichtig ist, daß durch die Möglichkeit des Aufbaus
des Gehäuses auf den kostspieligen quadratischen Schalttafelausschnitt verzichtet werden kann.

Der Tubus kann einteilig an die Frontplatte angespritzt sein.
Es kann sich aber auch um einen angeflanschten Tubus 27 handeln.

Meßinstrumentengehäuse

Patentansprüche:

1. Meßinstrumentengehäuse mit einer die Skala und das Deckglas tragenden, eine Durchtrittsöffnung für die Zeigerantriebsmittel aufweisenden Frontplatte, welche eine im wesentlichen ebene Rückfläche aufweist, und einem sich im Bereich der Durchtrittsöffnung von der Rückseite der Frontplatte weg erstreckenden, das Meßwerk aufnehmenden, zylindrischen Tubus, dadurch g e k e n n z e i c h n e t , daß auf einer von einem dünnen Rand (13) umgebenen, eine Ausnehmung (14) zur Unterbringung der Skala (15) und gegebenenfalls der Blende (16) umgebenden, schmalen Auflagefläche (11) der auf der Frontseite ringsum einen Einbauflansch (25) aufweisenden Frontplatte (12) ein von der Frontseite her nach hinten abgestufter, schmaler Randbereich (17) des Deckglases (18,18') aufliegt, der von der der Auflageseite entgegengesetzten Seite von einem an der Frontplatte (12) befestigten Rahmen (19,19',19") an der
Auflagefläche (11) festhaltbar ist, und daß an der
Rückseite der Frontplatte (12) Mittel (22,23,24) zum
Befestigen der Frontplatte (12) an der Schalttafel (26)
bei am Rand (20) der Schalttafelöffnung (21) aufliegendem Einbauflansch (25) und bei durch eine Bohrung (20')
einer Schalttafel (26) hindurchgestecktem Tubus (27) und
mit der Rückseite an der Frontseite der Schalttafel
(26) anliegender Frontplatte (12) vorgesehen sind.

2. Meßinstrumentengehäuse nach Anspruch 1, dadurch g e -
k e n n z e i c h n e t , daß an der Rückseite der
Frontplatte (12) auch Mittel (29) zum Befestigen der
Frontplatte (12) an einem den Randbereich (17) des
Deckglases (18) gegen die Auflagefläche (11) haltenden, in einer Schalttafelöffnung (21) zu befestigenden
Einbaurahmen (19") vorgesehen sind.

3. Meßinstrumentengehäuse nach Anspruch 1 oder 2, dadurch
g e k e n n z e i c h n e t , daß an der Rückseite der
Frontplatte (12) auch Mittel (29') zum Befestigen der
ein der Stärke der Schalttafel (26) und mit dem Umriß
ihres dicken Zentralteiles (30') dem Umriß der Schalttafelöffnung (21) entsprechendes Stufendeckglas (18')
tragenden Frontplatte (12) von hinten in der Schalttafelöffnung (21) vorgesehen sind, wobei die von der Auflageseite entgegengesetzte Seite des Randbereiches (17') des Stufendeckglases (18') von dem Rand (20) der Schalttafelöffnung (21) an der Auflagefläche (11) festgehalten ist.

0044542

4. Meßinstrumentengehäuse nach einem der vorhergehenden Ansprüche, dadurch g e k e n n z e i c h n e t , daß für die Frontplatte (12) zwei aufschnappbare Rahmen (19,19') vorgesehen sind, deren Tiefe der Tiefe des Flansches (25) bzw. der gesamten Frontplatte (12) entspricht.

5. Meßinstrumentengehäuse nach einem der vorhergehenden Ansprüche, dadurch g e k e n n z e i c h n e t , daß sich senkrecht von der Rückseite der Frontplatte (12) außerhalb des Bereiches des Tubus (27) wenigstens ein und vorzugsweise in deutlichem Abstand zwei Befestigungsstifte (22) erstrecken.

6. Meßinstrumentengehäuse nach Anspruch 5, dadurch g e k e n n z e i c h n e t , daß zwei Befestigungsstifte (22) im wesentlichen in zwei auf einer Diagonalen liegenden Ecken der Frontplatte (12) angeordnet sind.

7. Meßinstrumentengehäuse nach Anspruch 6, dadurch g e k e n n z e i c h n e t , daß der Tubus (27) in einer der beiden verbleibenden Ecken angeordnet ist.

8. Meßinstrumentengehäuse nach einem der Ansprüche 5 bis 7, dadurch g e k e n n z e i c h n e t , daß ein Haltebügel (23) mit Bohrungen (31) zur Aufnahme der Befestigungsstifte (22) sich zumindest teilweise bis über den Flansch (25) erstreckt.

9. Meßinstrumentengehäuse nach Anspruch 8, dadurch g e k e n n z e i c h n e t , daß der Haltebügel (23) ein im wesentlichen ebenes Kunststoffbauteil ist, welches sich zwischen den und um die Befestigungsstifte (22) herum erstreckt.

10. Meßinstrumentengehäuse nach Anspruch 9, dadurch g e k e n n z e i c h n e t , daß der Haltebügel (23) im Bereich der Befestigungsstifte (22) entsprechend der Frontplatte (12) rechtwinklige Eckbereiche (33) aufweist und die rechtwinklig zueinander verlaufenden Ränder (32) der Eckbereiche (33) mit dem Flansch (25) der Frontplatte (12) im wesentlichen fluchten.

- 4 -

0044542

11. Meßinstrumentengehäuse nach Anspruch 10, dadurch g e k e n n - z e i c h n e t , daß die beiden Eckbereiche (33) durch ein am Tubus (27) vorbeilaufendes Verbindungsstück (34) zusammenhängen.

12. Meßinstrumentengehäuse nach Anspruch 10 oder 11, dadurch g e - k e n n z e i c h n e t , daß der Haltebügel (23) an den Eckbereichen (33) axial gegenüber dem Flansch (25) von dem ebenen Bauteil nach einer Seite vorstehende gerade schmale Ränder (32) aufweist.

13. Meßinstrumentengehäuse nach einem der vorhergehenden Ansprüche, dadurch g e k e n n z e i c h n e t , daß der Randbereich (17) des Deckglases (18) mit seitlichem Abstand von dem dickeren Zentralteil (30) sich von der Frontseite wegerstreckende Rippen (35) aufweist, zwischen welche und den Zentralteil (30) Vorsprünge (36) des Rahmens (19) greifen.

14. Meßinstrumentengehäuse nach einem der vorhergehenden Ansprüche mit einer zwischen Deckglas und Frontplatte angeordneten Blende, dadurch g e k e n n z e i c h n e t , daß die Blende (16) vom Deckglas (18,18') am Boden der Ausnehmung (14) gehalten ist.

15. Meßinstrumentengehäuse nach Anspruch 14, dadurch g e k e n n - z e i c h n e t , daß axial hinter dem Flansch (25) in einer Schmalseite der Frontplatte (12) ein Schlitz (37) vorgesehen ist, welcher innen in der Ausnehmung (14) mündet.

16. Meßinstrumentengehäuse nach Anspruch 15, dadurch g e k e n n - z e i c h n e t , daß der hintere Rand des Schlitzes (37) bündig mit dem ebenen Boden der Ausnehmung (14) ist.

17. Meßinstrumentengehäuse nach Anspruch 16, dadurch g e k e n n - z e i c h n e t , daß die Blende (16) an der Schlitzseite einen der Schlitzbreite entsprechenden Abstand von dem Boden der Ausnehmung (14) hat und an den übrigen Seiten mit dem Schlitz (37) ausgerichtete Führungen (38) trägt, welche sich in Vertiefungen (39) am Boden der Ausnehmung (14) erstrecken.

18. Meßinstrumentengehäuse nach einem der Ansprüche 15 bis 17, dadurch gekennzeichnet, daß der Schlitz (37) durch ein aufschnappbares Winkelteil (40) abdeckbar ist, welches im aufgeschnappten Zustand in eine Nut (41) an der Rückseite des Flansches (25) eingreift und mit den übrigen Seiten der Frontplatte (12) fluchtet.

FIG.1

FIG.4

FIG.2

FIG.3

FIG.5

FIG.6

55  32

31

33

32

33

32

54

34  23

31

32

FIG.7

31

32  32

55

FIG. 8

FIG. 9

FIG.10

FIG.11

FIG.12